# EUROPÄISCHE PATENTSCHRIFT

(11) **EP 0 904 576 B1**
(45) Veröffentlichungstag und Bekanntmachung des Hinweises auf die Patenterteilung: **04.06.2003**
(21) Anmeldenummer: 98916836.4
(22) Anmeldetag: 04.03.1998
(51) Int. Cl.: G05F 1/59, G05F 3/26

(54) **STROMVERSORGUNGSSCHALTUNG**
POWER SUPPLY CIRCUIT
MONTAGE D'ALIMENTATION EN COURANT

(30) Priorität: 13.03.1997 DE 19710440
(43) Veröffentlichungstag der Anmeldung: 31.03.1999
(73) Patentinhaber: ROBERT BOSCH GMBH, 70442 Stuttgart (DE)
(72) Erfinder: BARTH, Michael, D-73230 Kirchheim (DE); KÖHLER, Dietmar, D-72649 Wolfschlugen (DE); MEROTH-LIENKAMP, Andrea, D-72766 Reutlingen (DE); MÜLLER, Bernd, D-72766 Reutlingen (DE); LACHER, Steffen, D-72764 Reutlingen (DE)
(86) Internationale Anmeldenummer: DE9800622
(87) Internationale Veröffentlichungsnummer: WO98040803

(56) Entgegenhaltungen:
- EP-A- 0 316 781
- EP-A- 0 465 933
- US-A- 4 617 473
- TIETZE U, SCHENK CH: "Halbleiter-Schaltungstechnik" 1990 , SPRINGER VERLAG , BERLIN XP002073243 17110 in der Anmeldung erwähnt siehe Absatz 4.6.3

## Beschreibung

### Stand der Technik

Die Erfindung geht aus von einer Stromversorgungsschaltung nach der Gattung der unabhängigen Ansprüche. Die Stromversorgungsschaltung soll an mehreren Eingangsspannungsquellen betrieben werden, die unterschiedliche Spannungen aufweisen können. Die Eingangsspannungsquellen können nicht ohne weiteres zusammengeschaltet werden. Eine übliche Maßnahme sieht daher den Einsatz von Entkopplungsdioden vor, so daß diejenige Eingangsspannungsquelle, die die höhere Spannung aufweist mit der weiteren Schaltung in Verbindung steht, während die Eingangsspannungsquelle mit der niedrigeren Spannung abgekoppelt ist. Nachteilig bei dieser bekannten Lösung ist es, daß die mindestens auftretende Spannungsdifferenz zwischen einem Ausgang der Stromversorgungsschaltung und der Eingangsspannungsquelle um die Flußspannung einer Diode zusätzlich zu der ohnehin in der Stromversorgungsschaltung auftretenden Spannungsdifferenz vergrößert wird.

Der Erfindung liegt die Aufgabe zugrunde, eine Stromversorgungsschaltung anzugeben, die aus wenigstens zwei unterschiedlichen Eingangsspannungsquellen versorgt werden kann, wobei eine möglichst geringe Spannungsdifferenz zwischen dem Ausgang der Stromversorgungsschaltung und der Eingangsspannungsquelle mit der höchsten Spannung auftreten soll.

Die Aufgabe wird durch die in den beiden unabhängigen Ansprüchen angegebenen Merkmalen jeweils gelöst.

### Vorteile der Erfindung

Den unterschiedlichen Ausführungen der erfindungsgemäßen Stromversorgungsschaltung ist gemeinsam, daß an jeder Eingangsspannungsquelle ein Stromspiegel angeschlossen ist, der den von einer Stromquelle bereitgestellten Strom dem Steuereingang eines Ausgangstransistors zur Verfügung stellt. Mit dieser Maßnahme kann die Steuerspannung des Ausgangstransistors bis nahe an die Spannung der betreffenden Eingangsspannungsquelle heranreichen. Die Spannungsdifferenz kann im Bereich von nur 0,1 bis 0,3 Volt liegen, die der Sättigungsspannung einer Kollektor-Emitter-Strecke eines im Stromspiegel enthaltenen Transistors entspricht.

Die Stromspiegel, auf die im folgenden Bezug genommen wird, sind in der Grundlagenliteratur, beispielsweise in dem Fachbuch von U. Tietze und Ch. Schenk, "Halbleiter-Schaltungstechnik", 5. Auflage, 1980, S. 55 - 56 ausführlich beschrieben. Ein Stromspiegel stellt an einem Ausgangsstromanschluß einen maximalen Strom bereit, der an einem Eingangsstromanschluß vorgegeben wird. Das Übersetzungsverhältnis kann frei wählbar vorgegeben werden. Ein wesentlicher Vorteil liegt darin, daß zwischen dem in den Eingangsstromanschluß fließenden Strom und dem aus dem Ausgangsstromanschluß herausfließenden Strom ein Potentialunterschied liegen kann. Der Stromspiegel ist an einen Stromversorgungsanschluß anzuschließen, der in der Lage sein muß, die im Stromspiegel auftretenden Ströme bereitzustellen, wobei die Spannung am Stromversorgungsanschluß die Potentialverhältnisse bestimmt.

Gemäß einer ersten Ausführung der erfindungsgemäßen Schaltung sind die wenigstens zwei Eingangsspannungsquellen über die aus dem Stand der Technik bekannten Entkopplungsdioden an einem Ausgangstransistor zusammengeschaltet. Eine Reduzierung des auftretenden Spannungsabfalls ergibt sich dennoch durch den Anschluß des Stromspiegels unmittelbar an der Eingangsspannungsquelle, so daß zusätzlich zu dem Spannungsabfall, der an den Entkopplungsdioden auftritt, nur noch ein geringer Spannungsabfall am Ausgangstransistor in Kauf genommen werden muß. Der Spannungsabfall am Ausgangstransistor ist durch dessen Sättigungsspannung der Emitter-Kollektor-Strecke bestimmt.

Gemäß einer anderen Ausführung der erfindungsgemäßen Stromversorgungsschaltung ist jeder Eingangsspannungsquelle ein Ausgangstransistor zugeordnet. Die Ausgangstransistoren sind am Ausgang der Stromversorgungsschaltung zusammengeschaltet. Die Ausgangstransistoren sorgen für die erforderliche Entkopplung der Eingangsspannungsquellen. Die erfindungsgemäße Stromversorgungsschaltung gemäß dieser Ausführung ermöglicht eine besonders geringe Spannungsdifferenz zwischen der am Ausgang der Stromversorgungsschaltung liegenden Spannung und der Eingangsspannungsquelle mit der höchsten Spannung. Durch den Wegfall der Entkopplungsdioden sinkt die minimale Spannungsdifferenz auf die Flußspannung der Ausgangstransistoren.

Vorteilhafte Weiterbildungen und Ausgestaltungen der erfindungsgemäßen Stromversorgungsschaltungen ergeben sich aus abhängigen Ansprüchen. Eine erste vorteilhafte Ausgestaltung sieht vor, daß eine einzige Stromquelle in der erfindungsgemäßen Stromversorgungsschaltung enthalten ist, die einen vorgegebenen Strom den Stromspiegeln zur Verfügung stellt. Mit dieser Maßnahme ist eine kostengünstige Realisierung möglich. Weiterhin ist der maximale Strom, den die erfindungsgemäße Stromversorgungsschaltung abgeben kann, durch den von der Stromquelle bereitgestellten Strom, das Stromversetzungsverhältnis des Stromspiegels sowie des Stromverstärkungsfaktors des Ausgangstransistors festgelegt. Die Spannungsversorgungsschaltung kann durch schaltungstechnische Maßnahmen kurzschlußfest gemacht werden. Dazu wird üblicherweise der Strom erfaßt. Überschreitet der Strom einen vorgegebenen Maximalwert, reduziert ein zusätzlicher Schaltungsteil den Strom am Ausgang der Stromspiegel. Die Stromaufnahme ist unabhängig von der Anzahl der tatsächlich eingeschalteten Eingangsspannungsquellen.

Eine andere vorteilhafte Ausgestaltung sieht vor, daß die Ausgangsspannung auf einen vorgegebenen Wert festgelegt ist. Eine einfache Stabilisierung der Ausgangsspannung ist durch eine Klammerung des Steuereingangs des Ausgangstransistors auf ein vorgegebenes Potential möglich. Geeignet ist vorzugsweise eine Begrenzerdiode. Eine vorteilhafte Weiterbildung dieser Maßnahme sieht einen geschlossenen Regelkreis vor, der die Ausgangsspannung mit einer Referenzspannung vergleicht. Mit dieser Maßnahme ist eine stabile Ausgangsspannung erreichbar.

Die gemäß der ersten Ausführung der erfindungsgemäßen Stromversorgungsschaltung erforderlichen Entkopplungsdioden sind vorzugsweise als Bipolardioden realisiert, die eine hohe Zuverlässigkeit aufweisen. Eine andere Ausgestaltung betrifft die Realisierung der Ausgangstransistoren, die vorzugsweise eine NPN-Struktur aufweisen. Mit dieser Maßnahme ist eine einfache Integration der Ausgangstransistoren mit den weiteren elektronischen Komponenten auf einem Siliciumchip möglich.

Eine bevorzugte Verwendung der erfindungsgemäßen Stromversorgungsschaltung ist in einem Kraftfahrzeug gegeben. Einerseits finden Bestrebungen statt, anstelle einer einzigen Bordnetzspannung, die üblicherweise 12 V oder 24 V beträgt, mehrere unterschiedliche Bordnetzspannungen vorzusehen. Andererseits sind in einem modernen Kraftfahrzeug zahlreiche elektronische Geräte eingebaut, die bereits Stromversorgungsschaltungen enthalten, die im vorliegenden Fall als Eingangsspannungsquellen verwendet werden können.

Weitere vorteilhafte Ausgestaltungen und Weiterbildungen der erfindungsgemäßen Stromversorgungsschaltung ergeben sich aus weiteren abhängigen Ansprüchen und aus der folgenden Beschreibung.

### Zeichnung

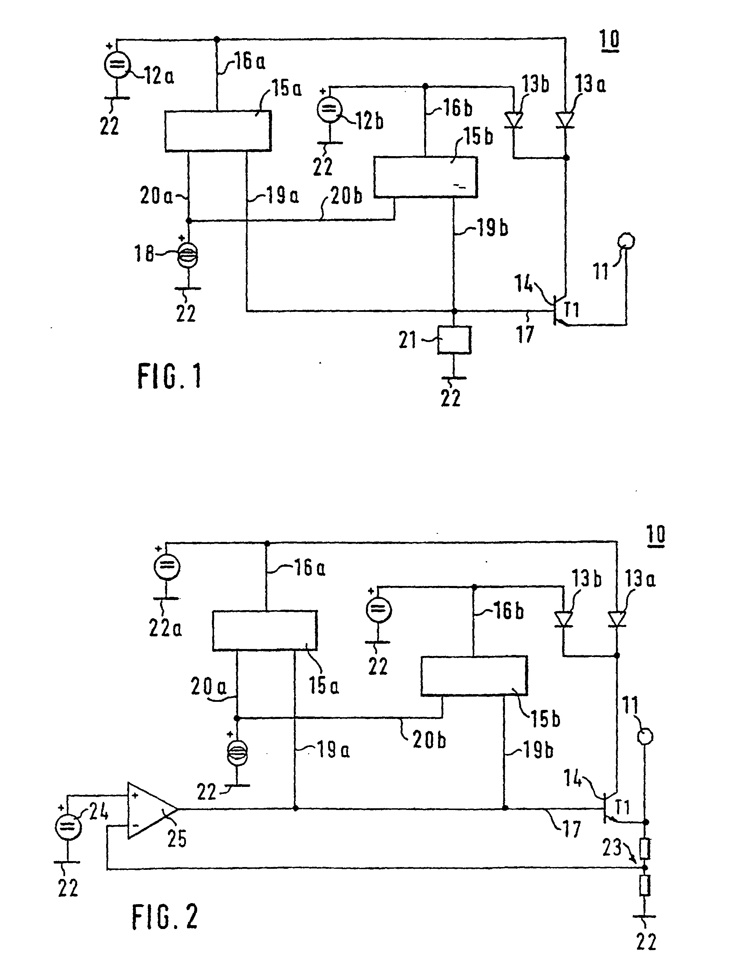

Die Figuren 1 bis 4 zeigen Schaltbilder unterschiedlicher Ausführungsbeispiele einer erfindungsgemäßen Stromversorgungsschaltung.

Figur 1 zeigt eine Stromversorgungsschaltung 10, die an einem Ausgang 11 eine Ausgangsspannung bereitstellt. Die Eingangsspannung der Stromversorgungsschaltung 10 wird von verschiedenen Eingangsspannungsquellen bereitgestellt. Im gezeigten Ausführungsbeispiel sind eine erste Eingangsspannungsquelle 12a und eine zweite Eingangsspannungsquelle 12b gezeigt, die über eine erste Entkopplungsdiode 13a und eine zweite Entkopplungsdiode 13b an einem gemeinsamen Ausgangstransistor 14 zusammengeführt sind. Der gemeinsame Ausgangstransistor 14 ist mit dem Ausgang 11 verbunden. Ein erster Stromspiegel 15a, dessen Stromversorgungsanschluß 16a mit der ersten Eingangsspannungsquelle 12a verbunden ist, stellt einem Steuereingang 17 des gemeinsamen Ausgangstransistors 14 einen Strom zur Verfügung, der von einer Stromquelle 18 vorgegeben ist. Der erste Stromspiegel 15a ist deshalb mit seinem Ausgangsstromanschluß 19a mit dem Steuereingang 17 verbunden.

Der Steuereingang 17 des gemeinsamen Ausgangstransistors 14 ist weiterhin mit einem Ausgangsstromanschluß 19b eines zweiten Stromspiegels 15b verbunden, dessen Stromversorgungsanschluß 16b an der zweiten Eingangsspannungsquelle 12b angeschlossen ist.

Die beiden Stromspiegel 15a, 16b sind mit ihren Eingangsstromanschlüssen 20a, 20b jeweils mit der Stromquelle 18 verbunden.

Der Steuereingang 17 des gemeinsamen Ausgangstransistors 14 ist über einen gemeinsamen Spannungsbegrenzer 21 gegen eine Schaltungsmasse 22 geschaltet.

Die in Figur 1 gezeigte Stromversorgungsschaltung 10 arbeitet folgendermaßen:

Die Stromversorgungsschaltung 10 stellt am Ausgang 10 eine Spannung bereit, die entweder aus der ersten oder der zweiten Eingangsspannungsquelle 12a, 12b gewonnen wird. Die beiden Eingangsspannungsquellen 12a, 12b sind über die beiden Entkopplungsdioden 13a, 13b am gemeinsamen Ausgangstransistor 14 zusammengeschaltet und bilden eine analoge ODER-Verknüpfung. Mit dem Ausgangstransistor 14 ist daher diejenige Eingangsspannungsquelle 12a, 12b verbunden, die bei der in Figur 1 eingetragenen Polarität der Entkopplungsdioden 13a, 13b die höhere Spannung bereitstellt.

Zur Ansteuerung des gemeinsamen Ausgangstransistors 14 ist ein Stromspiegel 15a, 15b vorgesehen. Jede Eingangsspannungsquelle 12a, 12b ist mit einem separaten Stromspiegel 15a, 15b über den jeweiligen Eingangsstromanschluß 16a, 16b verbunden. Der Stromspiegel 15a, 15b liefert an den Steuereingang 17 des gemeinsamen Ausgangstransistors 14 einen Strom, der von der Stromquelle 18 vorgegeben wird. Der Stromspiegel 15a, 15b, dessen detailierte Schaltungsrealisierung der eingangs genannten Literaturstelle entnommen werden kann, spiegelt den durch den Eingangsstromanschluß 20a, 20b in den Stromspiegel 15a, 15b hineinfließenden Strom in den Ausgangsstromanschluß 19a, 19b, wobei das Übersetzungsverhältnis frei wählbar ist. Der maximale Strom, der in den Steuereingang 17 des gemeinsamen Ausgangstransistors 14 fließen kann, ist deshalb durch den Strom der Stromquelle 18 sowie durch das eingestellte Übersetzungsverhältnis festgelegt. In Abhängigkeit vom Stromverstärkungsfaktor des gemeinsamen Ausgangstransistors 14 ist der maximale Strom festgelegt, der dem Ausgang 11 entnommen werden kann. Die erfindungsgemäße Stromversorgungsschaltung 10 ist kurzschlußfest.

Der wesentliche Vorteil, den die Ansteuerung des gemeinsamen Ausgangstransistors 14 mit dem Stromspiegel 15a, 15b bringt, liegt darin, daß der dem Steuereingang 17 des gemeinsamen Ausgangstransistors 14 zur Verfügung gestellte Strom ein anderes Potential aufweisen kann als der von der Stromquelle 18 abgegebene Strom. Durch die Anbindung des Stromspiegels 15a, 15b über seinen Stromversorgungsanschluß 16a, 16b mit der Eingangsspannungsquelle 12a, 12b liegt das Potential am Steuereingang 17 des gemeinsamen Ausgangstransistors 14 nur geringfügig unterhalb der Spannung der Eingangsspannungsquelle 12a, 12b. Die Spannungsdifferenz ist von der schaltungstechnischen Realisierung des Stromspiegels 15a, 15b abhängig. Bei einer Realisierung gemäß der zuvor genannten Literaturstelle entspricht die Spannungsdifferenz einer Sättigungsspannung einer Kollektor-Emitter-Strecke eines Transistors, die im Bereich von 0,1 V bis 0,3 V liegen kann. Zu dieser Spannungsdifferenz muß noch die Spannungsdifferenz addiert werden, die zwischen dem Steuereingang 17 des gemeinsamen Ausgangstransistors 14 und dem Ausgang 11 auftritt. Bei einer Realisierung des gemeinsamen Ausgangstransistors 14 in Siliciumtechnik muß noch eine Spannungsdifferenz von ungefähr 0,7 V addiert werden.

Ein weiterer Spannungsabfall tritt an den Entkopplungsdioden 13a, 13b auf, der von der Realisierung der Dioden abhängt. Sofern bipolare Siliciumdioden eingesetzt werden, kann der zusätzliche Spannungsabfall an den Entkopplungsdioden 13a, 13b bis zu 1 V betragen. Da aber gegenüber dem vorbekannten Stand der Technik das Potential am Steuereingang 17 des gemeinsamen Ausgangstransistors 14 erheblich erhöht ist, ergibt sich insgesamt eine geringere Spannungsdifferenz als sie bisher erzielt werden konnnte.

Die Spannung am Ausgang 11 kann mit dem gemeinsamen Spannungsbegrenzer 21 festgelegt werden, der das Potential am Steuereingang 17 des gemeinsamen Ausgangstransistors 14 festlegt. Geeignet ist eine Begrenzerdiode, beispielsweise eine Zenerdiode. Bei der Festlegung der Spannung des gemeinsamen Spannungsbegrenzers 21 ist noch die auftretende Spannungsdifferenz zwischen dem Steuereingang 17 und dem Ausgang 11 zu berücksichtigen.

Figur 2 zeigt eine Weiterbildung der erfindungsgemäßen Stromversorgungsschaltung 10 gemäß Figur 1. Diejenigen in Figur 2 gezeigten Teile, die mit den in Figur 1 gezeigten Teilen übereinstimmen, tragen jeweils dieselben Bezugszeichen. Anstelle des in Figur 1 gezeigten gemeinsamen Spannungsbegrenzers 21 sind ein Spannungsteiler 23, eine Referenzspannungsquelle 24 sowie ein Vergleicher 25 vorgesehen. Der Spannungsteiler 23 sowie die Referenzspannungsquelle 24 sind jeweils mit dem Vergleicher 25 verbunden, dessen Ausgang mit dem Steuereingang 17 des gemeinsamen Ausgangstransistors 14 verbunden ist.

Gegenüber der in Figur 1 gezeigten erfindungsgemäßen Stromversorgungsschaltung 10 ermöglicht die Weiterbildung gemäß Figur 2 eine Regelung der am Ausgang 11 bereitgestellten Spannung der Stromversorgungsschaltung 10 auf einen konstanten Wert, der von der Referenzspannungsquelle 24 festgelegt ist. Vorhanden ist ein geschlossener Regelkreis, so daß in Abhängigkeit von der Beschaltung des Vergleichers 25 eine hohe Spannungskonstanz erreicht werden kann.

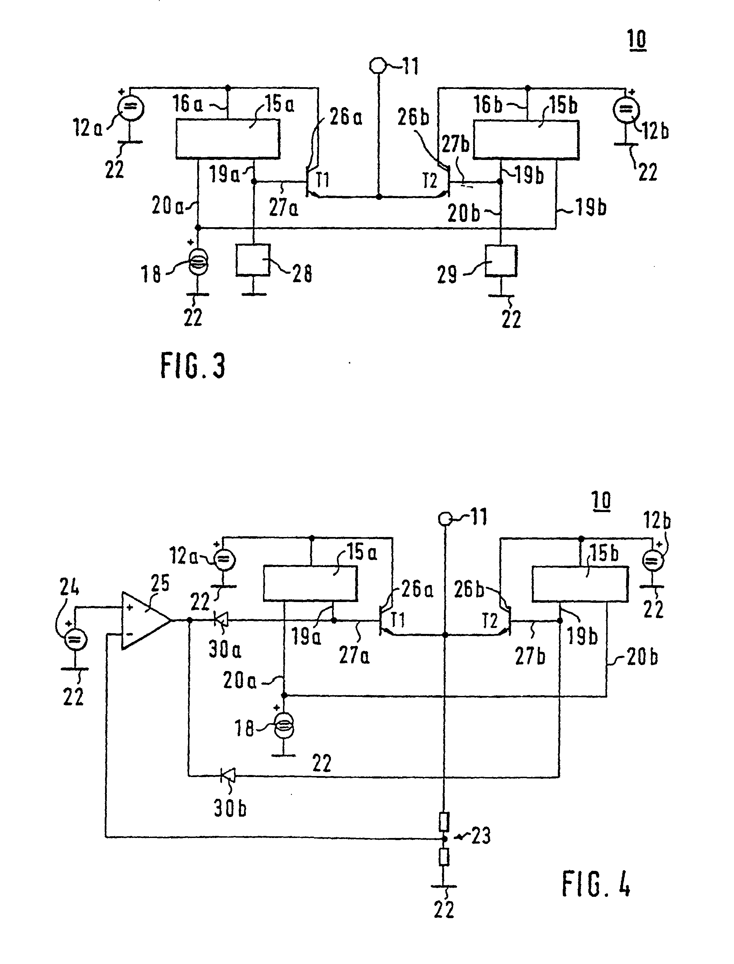

Figur 3 zeigt eine andere erfindungsgemäße Ausführung der Stromversorgungsschaltung 10. Diejenigen in Figur 3 gezeigten Teile, die mit den in Figur 1 gezeigten Teilen übereinstimmen, tragen jeweils dieselben Bezugszeichen. Der wesentliche Unterschied zwischen beiden Ausführungen liegt darin, daß anstelle des gemeinsamen Ausgangstransistors 14 und der Entkopplungsdioden 13a, 13b ein erster Ausgangstransistor 26a und ein zweiter Ausgangstransistor 26b vorgesehen sind. Der erste Ausgangstransistor 26a ist unmittelbar an der ersten Eingangsspannungsquelle 12a angeschlossen und der zweite Ausgangstransistor 26b ist unmittelbar an der zweiten Eingangsspannungsquelle 12b angeschlossen. Beide Ausgangstransistoren 26a, 26b sind mit dem Ausgang 11 verbunden.

Ein Steuereingang 27a des ersten Ausgangstransistors 26a ist sowohl mit dem ersten Stromspiegel 15a über dessen Ausgangsstromanschluß 19a als auch mit einem ersten Spannungsbegrenzer 28 verbunden, der an der Schaltungsmasse 22 angeschlossen ist. Ein Steuereingang 27b des zweiten Ausgangstransistors 26b ist sowohl mit dem zweiten Stromspiegel 15b über dessen Ausgangsstromanschluß 19b als auch mit einem zweiten Spannungsbegrenzer 29 verbunden, der an der Schaltungsmasse 22 angeschlossen ist.

Der wesentliche Unterschied zwischen dem in Figur 1 und dem in Figur 3 gezeigten Ausführungsbeispiel der erfindungsgemäßen Stromversorgungsschaltung 10 liegt darin, daß die erzielbare minimale Spannungsdifferenz zwischen der Spannung am Ausgang 11 und der höheren Spannung einer der Eingangsspannungsquellen 12a, 12b gemäß der Ausführung nach Figur 3 nochmals geringer ist als gemäß dem Ausführungsbeispiel gemäß Figur 1. Erreicht wird dies durch Wegfall des Spannungsabfalls, der an den Entkopplungsdioden 13a, 13b gemäß Figur 1 unvermeidlich auftritt. Die Entkopplung der Eingangsspannungsquellen 12a, 12b ist durch den Einsatz des ersten und zweiten Ausgangstransistors 26a, 26b möglich. Jede Eingangsspannungsquelle 12a, 12b erhält demnach ihren eigenen Ausgangstransistor, wobei sämtliche Transistoren 26a, 26b am Ausgang 11 angeschlossen sind.

Eine Festlegung der Spannung am Ausgang 11 ist durch die Klammerung der Steuereingänge 27a, 27b der Ausgangstransistoren 26a, 26b auf vorgegebene Werte mittels der beiden Spannungsbegrenzer 28, 29 möglich. Vorzugsweise geben die Spannungsbegrenzer 28, 29 dieselbe Spannung vor.

Die zwischen dem Ausgang 11 und der Eingangsspannungsquelle 12a, 12b auftretende Spannungsdifferenz wird nur noch von der im Stromspiegel 15a, 16b auftretenden Spannungsdifferenz sowie von der zwischen dem Steuereingang 27a, 27b des Ausgangstransistors 26a, 26b und dem Ausgang 11 liegenden Spannungsdifferenz bestimmt. Dagegen ist die am Ausgangstransistor 26a, 26b zwischen dem Ausgang 11 und der Eingangsspannungsquelle 12a, 12b auftretende Spannungsdifferenz vernachlässigbar und erhöht somit nicht die gesamte Spannungsdifferenz.

Figur 4 zeigt eine Weiterbildung der in Figur 3 gezeigten erfindungsgemäßen Stromversorgungsschaltung 10. Diejenigen in Figur 4 gezeigten Teile, die mit den in Figur 3 gezeigten Teilen übereinstimmen, tragen jeweils dieselben Bezugszeichen. Gegenüber der in Figur 3 gezeigten erfindungsgemäßen Stromversorgungsschaltung 10 sind die dort enthaltenen Spannungsbegrenzer 28, 29 ersetzt durch den aus Figur 2 bekannten Spannungsteiler 23, die Referenzspannungsquelle 24 sowie den Vergleicher 25. Da gegenüber dem in Figur 2 gezeigten Ausführungsbeispiel nunmehr separate Ausgangstransistoren 26a, 26b vorgesehen sind, werden eine erste weitere Entkopplungsdiode 30a sowie eine weitere zweite Entkopplungsdiode 30b benötigt. Die erste weitere Entkopplungsdiode 30a verbindet den Vergleicher 25 mit dem Steueranschluß 27a des ersten Ausgangstransistors 26a und die zweite weitere Entkopplungsdiode 30b verbindet den Vergleicher 25 mit dem Steuereingang 27b des zweiten Ausgangstransistors 26b. Anstelle der in Figur 3 gezeigten einfachen Möglichkeit der Festlegung der Spannung am Ausgang 11 auf die Spannung des ersten oder zweiten Spannungsbegrenzers 28, 29 ist gemäß der Weiterbildung nach Figur 4 eine Regelung der Spannung am Ausgang 11 auf den von der Referenzspannung 24 festgelegten Wert möglich. Der entstandene geschlossene Regelkreis kann im Hinblick auf die angestrebte Regelgüte ausgelegt werden und ermöglicht eine hohe Konstanz der Spannung am Ausgang 11.

## Patentansprüche

1. Stromversorgungsschaltung mit wenigstens zwei Eingangsspannungsquellen, die über Entkopplungsdioden an einem Ausgangstransistor zusammengeschaltet sind, **dadurch gekennzeichnet, daß** an jeder Eingangsspannungsquelle (12a, 12b) ein Stromspiegel (15a, 15b) angeschlossen ist, der den von einer Stromquelle (18) bereitgestellten Strom dem Steuereingang (17) des Ausgangstransistors (14) zur Verfügung stellt.

2. Stromversorgungsschaltung mit wenigstens zwei Eingangsspannungsquellen, die über Entkopplungsmittel an einem Ausgang zusammengeschaltet sind, **dadurch gekennzeichnet, daß** als Entkopplungsmittel Ausgangstransistoren (26a, 26b) vorhanden sind, wobei jeder Eingangsspannungsquelle (12a, 12b) ein Ausgangstransistor (26a, 26b) zugeordnet ist, daß an jeder Eingangsspannungsquelle (12a, 12b) ein Stromspiegel (15a, 15b) angeschlossen ist, der den von einer Stromquelle (18) bereitgestellten Strom dem Steuereingang (27a, 27b) des mit der Eingangsspannungsquelle (12a, 12b) verbundenen Ausgangstransistors (26a, 26b) zur Verfügung stellt.

3. Stromversorgungsschaltung nach Anspruch 1 oder 2, **dadurch gekennzeichnet, daß** die eine Stromquelle (18) einen vorgegebenen Strom an die Stromspiegel (15a, 15b) abgibt.

4. Stromversorgungsschaltung nach Anspruch 1 oder 2, **dadurch gekennzeichnet, daß** die Spannung am Steuereingang (17, 27a, 27b) des Ausgangstransistors (14, 26a, 26b) auf einen vorgegebenen Wert festgelegt ist.

5. Stromversorgungsschaltung nach Anspruch 4, **dadurch gekennzeichnet, daß** zur Festlegung der Spannung eine Begrenzerdiode vorhanden ist.

6. Stromversorgungsschaltung nach Anspruch 4, **dadurch gekennzeichnet, daß** ein geschlossener Regelkreis zur Stabilisierung der Spannung an einem Ausgang (11) der Stromversorgungsschaltung (10) vorgesehen ist, der einen Vergleicher (25) und eine Referenzspannungsquelle (24) enthält.

7. Stromversorgungsschaltung nach Anspruch 1, **dadurch gekennzeichnet, daß** die Entkopplungsdioden (13a, 13b) in Bipolartechnik realisiert sind.

8. Stromversorgungsschaltung nach Anspruch 1 oder 2, **dadurch gekennzeichnet, daß** der Ausgangstransistor (14, 26a, 26b) ein NPN-Transistor ist.

9. Verwendung der Stromversorgungsschaltung (10) nach einem der vorhergehenden Ansprüche in einem Kraftfahrzeug.

## Claims

1. Power supply circuit having at least two input voltage sources, which are interconnected via decoupling diodes at an output transistor, **characterized in that** a current mirror (15a, 15b) is connected to each input voltage source (12a, 12b), which current mirror makes the current provided by a current source (18) available to the control input (17) of the output transistor (14).

2. Power supply circuit having at least two input voltage sources, which are interconnected via decoupling means at an output, **characterized in that** output transistors (26a, 26b) are present as decoupling means, each input voltage source (12a, 12b) being assigned an output transistor (26a, 26b), **in that** a current mirror (15a, 15b) is connected to each input voltage source (12a, 12b), which current mirror makes the current provided by a current source (18) available to the control input (27a, 27b) of the output transistor (26a, 26b) connected to the input voltage source (12a, 12b).

3. Power supply circuit according to Claim 1 or 2, **characterized in that** the one current source (18) outputs a predetermined current to the current mirrors (15a, 15b).

4. Power supply circuit according to Claim 1 or 2, **characterized in that** the voltage at the control input (17, 27a, 27b) of the output transistor (14, 26a, 26b) is fixed at a predetermined value.

5. Power supply circuit according to Claim 4, **characterized in that** a limiter diode is present for fixing the voltage.

6. Power supply circuit according to Claim 4, **characterized in that** a closed control loop for stabilizing the voltage at an output of the power supply circuit (10) is provided, which contains a comparator (25) and a reference voltage source (24).

7. Power supply circuit according to Claim 1, **characterized in that** the decoupling diodes (13a, 13b) are realized using bipolar technology.

8. Power supply circuit according to Claim 1 or 2, **characterized in that** the output transistor (14, 26a, 26b) is an NPN transistor.

9. Use of the power supply circuit (10) according to one of the preceding claims in a motor vehicle.

## Revendications

1. Circuit d'alimentation en courant avec au moins deux sources de tension d'entrée qui sont interconnectées à un transistor de sortie au moyen de diodes de découplage,
**caractérisé en ce qu'**
à chaque source de tension d'entrée (12a, 12b), est raccordé un réflecteur de courant (15a, 15b) qui fournit à l'entrée de commande (17) du transistor de sortie (14) le courant délivré par une source de courant (18).

2. Circuit d'alimentation en courant avec au moins deux sources de tension d'entrée qui sont interconnectées à un transistor de sortie au moyen de diodes de découplage,
**caractérisé en ce qu'**
on a des transistors de sortie (26a, 26b) en tant que diodes de découplage, un transistor de sortie (26a, 26b) étant associé à chaque source de tension d'entrée (12a, 12b), à chaque source de tension d'entrée (12a, 12b) est raccordé un réflecteur de courant (15a, 15b) qui fournit le courant délivré par une source de courant (18) à l'entrée de commande (27a, 27b) du transistor de sortie (26a, 26b) relié à la source de tension d'entrée (12a, 12b).

3. Circuit d'alimentation en courant selon la revendication 1 ou 2,
**caractérisé en ce que**
l'une des sources de courant (18) délivre un courant prédéfini au réflecteur de courant (15a, 15b).

4. Circuit d'alimentation en courant selon la revendication 1 ou 2,
**caractérisé en ce que**
la tension à l'entrée de commande (17, 27a, 27b) du transistor de sortie (14, 26a, 26b) est établie à une valeur prédéfinie.

5. Circuit d'alimentation en courant selon la revendication 4,
**caractérisé en ce que**
pour déterminer la tension, on a une diode de limitation.

6. Circuit d'alimentation en courant selon la revendication 4,
**caractérisé en ce qu'**
on prévoit un circuit de régulation fermé destiné à stabiliser la tension à une sortie (11) du circuit d'alimentation en courant (10), lequel contient un comparateur (25) et une source de courant de référence (24).

7. Circuit d'alimentation en courant selon la revendication 1,
**caractérisé en ce que**
les diodes de découplage (13a, 13b) sont réalisées selon la technique bipolaire.

8. Circuit d'alimentation en courant selon la revendication 1 ou 2,
**caractérisé en ce que**
le transistor de sortie (14, 26a, 26b) est un transistor NPN.

9. Utilisation du circuit d'alimentation en courant (10) selon l'une des revendications précédentes dans un véhicule automobile.
